# EUROPÄISCHE PATENTSCHRIFT

(11) **EP 2 786 826 B1**
(45) Veröffentlichungstag und Bekanntmachung des Hinweises auf die Patenterteilung: **28.02.2018**
(21) Anmeldenummer: 13162060.1
(22) Anmeldetag: 03.04.2013
(51) Int. Cl.: B23H 9/10, B23H 3/02, B23H 3/04

(54) **Elektrochemisches Bearbeitungsverfahren zur Herstellung von Ausnehmungen mit und ohne Hinterschneidungen**
Electrochemical machining process for the production of cavities with and without undercuts
Procédé de traitement électrochimique pour la fabrication d'évidements avec ou sans contre-dépouilles

(43) Veröffentlichungstag der Anmeldung: 08.10.2014
(73) Patentinhaber: MTU Aero Engines AG, 80995 München (DE)
(72) Erfinder: Platz, Albin, 86510 Ried-Baindlkirch (DE); Arbinger, Daniela, 94551 Hund Rohrstetten (DE)

(56) Entgegenhaltungen:
- EP-A1- 0 471 086
- EP-A2- 1 430 983
- EP-A2- 2 011 597
- GB-A- 933 731
- JP-A- H05 318 230

## Beschreibung

### HINTERGRUND DER ERFINDUNG

### GEBIET DER ERFINDUNG

Die vorliegende Erfindung betrifft ein Verfahren zur elektrochemischen Bearbeitung eines Bauteils gemäß dem Oberbegriff des Anspruchs 1. Ein solches Verfahren ist aus der WO 2006/137525 A1 bekannt.

### STAND DER TECHNIK

Elektrochemische Bearbeitungsverfahren werden beispielsweise bei der Herstellung von Leit- oder Laufschaufeln von stationären Gasturbinen oder Flugtriebwerken eingesetzt.

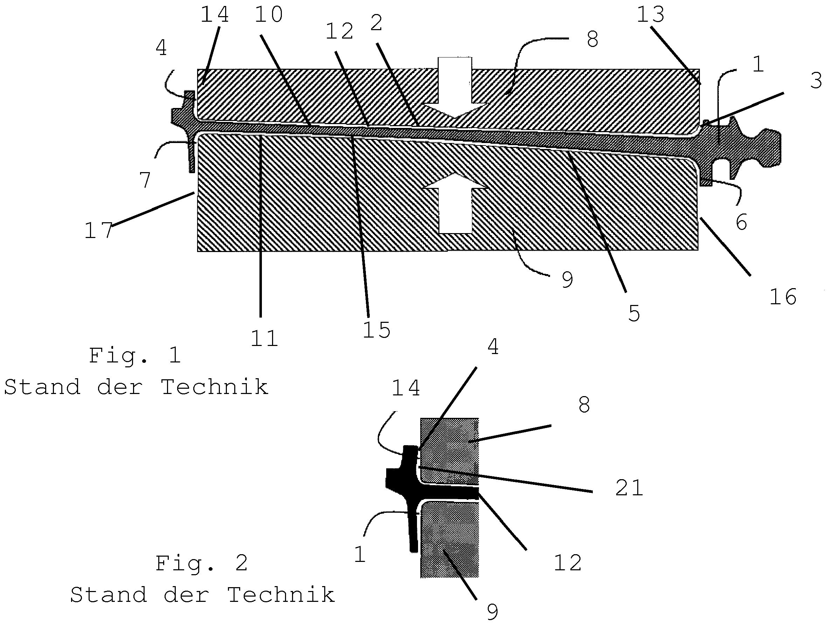

Die Figuren 1 und 2 zeigen Beispiele, wie beim Stand der Technik die entsprechende Bearbeitung von Leit- oder Laufschaufeln erfolgt.

Bei dem in Figur 1 gezeigten Bild ist zu erkennen, dass die Elektroden 8,9 bei der Bearbeitung einer Laufschaufel 1 lediglich in einer linearen Bewegung in Richtung der Schaufelblattflächen 2,5 verfahren werden (Senkbewegung), sodass an den Oberflächen der inneren und äußeren Deckbänder, nämlich den Oberflächen 3,4,6,7 kein definierter Abtrag eingestellt werden kann. Außerdem kann bei einer linearen Bewegung der Elektroden 8,9 auch keine Bearbeitung in der Weise erfolgen, dass Hinterschneidungen 20 erzeugt werden können, wie dies in der Figur 2 dargestellt ist.

Um diesem Problem abzuhelfen, ist im Stand der Technik bereits vorgeschlagen worden, mehrteilige Elektroden vorzusehen, wobei die unterschiedlichen Teile der Elektroden unterschiedlich verfahren werden können, um verschiedene Oberflächen zu bearbeiten.

Ein Beispiel hierfür ist die US 4,999,093, bei dieser Erfindung werden zur Bearbeitung von Schaufeln pro Seite 2 Elektroden verwendet, die miteinander über Finger verzahnt sind und während des Bearbeitens auseinander gefahren werden. Im Bereich der Verzahnung kann sich keine glatte Oberfläche ausbilden, weshalb zusätzliche mechanische Nachbearbeitungen am Schaufelblatt notwendig sind.

Ein weiteres Beispiel ist die WO 2006/137525A1, in der ebenfalls mit zwei Elektroden pro Seite bearbeitet wird, wobei eine der beiden Elektroden zuerst in das schräg stehende Werkstück unter Bearbeitung des Blattes und einer Deckbandseite eingefahren wird (erster Senkschritt) und danach die zweite Elektrode das zweite Deckband bearbeitet (zweiter Senkschritt).

Diese Vorgehensweise führt bei der Durchführung des zweiten Senkschrittes unweigerlich zu einem unkontrollierten Abtrag der zuerst gesenkten Flächen, weil der Strom weiterhin auch im Bereich der ersten Elektrode wirksam ist und dort einen Materialangriff verursacht.

Mit dem in der US 4,256,555 beschriebenen Verfahren lassen sich keine Schaufeln mit zwei Deckbändern herstellen.

Ferner ist bei den oben dargestellten Lösungen nachteilhaft, dass ein erheblicher operativer Aufwand für die mehrgliedrigen Elektroden aufgebracht werden muss.

### OFFENBARUNG DER ERFINDUNG

### AUFGABE DER ERFINDUNG

Es ist deshalb Aufgabe der vorliegenden Erfindung, ein Verfahren zur elektrochemischen Bearbeitung eines Bauteils bereitzustellen, bei dem unterschiedlich orientierte Oberflächen einer Ausnehmung definiert bearbeitet werden können, wobei insbesondere Hinterschneidungen in der Ausnehmung herstellbar sein sollen. Gleichzeitig soll das Verfahren einfach durchführbar sein.

### TECHNISCHE LÖSUNG

Diese Aufgabe wird gelöst durch ein Verfahren mit den Merkmalen des Anspruchs 1. Vorteilhafte Ausgestaltungen sind Gegenstand der abhängigen Ansprüche.
Gemäß der vorliegenden Erfindung wird vorgeschlagen, bei der Bearbeitung eines Bauteils, welches eine Ausnehmung mit mindestens drei zu bearbeitenden Oberflächen aufweist, die im Schnitt in etwa eine U-Form bilden, eine Elektrode abwechselnd so anzuordnen, dass eine Bearbeitung immer nur an zwei zu bearbeitenden Oberflächen stattfindet. Das zu bearbeitende Bauteil kann beispielsweise eine Lauf- oder Leitschaufel einer Gasturbine sein, bei der die drei zu bearbeitenden Oberflächen durch das Schaufelblatt und die oberen und unteren Deckbandflächen gebildet sein können.
Weist die Ausnehmung somit eine erste und eine zweite zu bearbeitenden Oberfläche auf, die in einem Winkel von größer als 0°, insbesondere größer als 20°, und kleiner als 180°, insbesondere kleiner als 160°, gegenüber einer dritten zu bearbeitenden Oberfläche angeordnet sind und diese einschließen, so kann die Elektrode abwechselnd so angeordnet werden, dass zunächst die erste Oberfläche (erste Deckbandfläche) und die dritte Oberfläche (Blattfläche) und anschließend die zweite Oberfläche (zweite Deckbandfläche) und die dritte Oberfläche (Blattfläche) bearbeitet werden. Entsprechend kann die Elektrode, die mindestens drei Arbeitsflächen aufweist, und als Negativform der zu bildenden Form, also komplementär zu der Kontur der zu bearbeitenden Ausnehmung aber kleiner dimensioniert ausgebildet ist, in einer ersten Bearbeitungsposition so angeordnet werden, dass eine erste Spaltbreite, die einer Bearbeitungsspaltbreite entspricht, zwischen einer ersten Arbeitsfläche und der ersten Oberfläche sowie zwischen einer dritten Arbeitsfläche und der dritten Oberfläche eingestellt wird. Anschließend wird die Elektrode bzw. das zu bearbeitende Bauteil so verfahren, dass die Elektrode in einer zweiten Bearbeitungsposition angeordnet ist, bei der die erste Spaltbreite zwischen einer zweiten Arbeitsfläche und der zweiten Oberfläche sowie zwischen der dritten Arbeitsfläche und der dritten Oberfläche eingestellt wird. Die erste Spaltbreite kann bei der Bearbeitung weiter verkleinert werden, sodass der ersten oder zweiten Position auch eine Position entspricht, bei der die erste Spaltbreite unterschritten wird.

Gleichzeitig ergibt sich, dass eine zweite Spaltbreite erzeugt wird, die größer ist als die erste Spaltbreite und zwar in Bezug auf die Arbeitsflächen bzw. zu bearbeitenden Oberflächen, die in der jeweiligen Bearbeitungsposition der Elektrode im Wesentlichen nicht bearbeitet werden.

Unter Spaltbreite wird ein minimaler Abstand zwischen der Arbeitsfläche der Elektrode und der zu bearbeitenden Oberfläche verstanden, da der Abstand zwischen der Arbeitsfläche einer Elektrode und der zu bearbeitenden Oberfläche und somit der Bearbeitungsspalt normalerweise nicht über die gesamten gegenüber liegenden Flächen gleich ist.

Bei der Bearbeitung einer Schaufel einer Strömungsmaschine kann also die Elektrode drei aktive Senkflächen in Form der späteren Fertigkontur, jedoch kürzer als die Blattfläche aufweisen und in einer ersten Position so angeordnet werden, dass die Bearbeitung zwischen einer ersten Deckbandfläche und der Blattfläche erfolgt. Anschließend wird die Elektrode bzw. das zu bearbeitende Bauteil so verfahren, dass die Elektrode in einer zweiten Position angeordnet ist, bei der die Bearbeitung zwischen einer ersten Deckbandfläche und der Blattfläche erfolgt.

Bei der Bearbeitung wird der Abtrag pro Seite jeweils so gering gehalten, dass auf der Blattfläche keine stufigen Übergänge zu sehen sind.

Die Bearbeitung kann hierbei so erfolgen, dass der Strom zur elektrochemischen Bearbeitung erst nach Erreichen der jeweiligen Bearbeitungsposition, also nach Erreichen der ersten Spaltbreite bzw. Unterschreiten derselben bzw. nach Erreichen der jeweiligen Startposition beispielsweise zwischen erster Deckbandfläche und Blattfläche oder zweiter Deckbandfläche und Blattfläche eingeschaltet wird.

Die abwechselnde Bearbeitung der ersten und zweiten Oberflächen in den jeweiligen Positionen kann in regelmäßigen oder unregelmäßigen Zyklen erfolgen.

Insbesondere kann die abwechselnde Bearbeitung in der ersten und zweiten Bearbeitungsposition mi einer Frequenz von 0,01 bis 100 Hz, insbesondere 0,1 bis 10 Hertz erfolgen.

Die Annäherung der Elektroden an die erste oder zweite Oberfläche bzw. in die erste oder zweite Bearbeitungsposition kann in einer beliebigen Bewegung erfolgen, insbesondere jedoch bereits in einer Bewegung, insbesondere einer linearen Bewegung, die auch bei der elektrochemischen Bearbeitung stattfindet, wobei die Bewegungsrichtung der linearen Bewegung bei der elektrochemischen Bearbeitung also der Senkbewegung unter einem Winkel von 20° bis 70°, vorzugsweise 30° bis 60°, insbesondere unter 45° zur dritten Oberfläche (Blattfläche) erfolgen kann.

Vor der abwechselnden Bearbeitung der Bauteilkontur bzw. der ersten und zweiten Oberfläche kann eine vorbereitende Bearbeitung, die auch als sogenanntes Auskammern bezeichnet werden kann, vorgeschaltet werden. Bei dieser vorbereitenden Bearbeitung kann die Elektrode zu den mindestens drei zu bearbeitenden Oberflächen in einer Vorbearbeitungsposition mit einem im Wesentlichen gleichmäßigen minimalen Abstand und/oder symmetrisch zur Blattfläche positioniert werden und eine übliche elektrochemische Bearbeitung in Richtung der Blattfläche erfolgen, bis eine Oberflächenkontur mit einem Aufmaß von 0,5 bis 3 mm erreicht ist. Dann kann sich die abwechselnde Bearbeitung der ersten und zweiten Oberfläche mit den unterschiedlichen Bearbeitungspositionen der Elektrode in den Positionen 1 und 2 anschließen, um die Endkontur auszubilden.

Die elektrochemische Bearbeitung insbesondere in den abwechselnden Positionen zur separaten Bearbeitung ausgewählter Oberflächen kann mit einem Pulsstrom erfolgen, wobei der Pulsstrom als Einzelpuls oder als Pulspaket aufgebracht werden kann.

Bei der elektrochemischen Bearbeitung kann auch eine mechanische Oszillation des zu bearbeitenden Bauteils oder der Elektrode eingestellt und der Senkbewegung überlagert werden, und zwar insbesondere in Richtung der zu bearbeitenden Oberfläche, sodass die Spaltbreite wiederholt reduziert und vergrößert wird, so dass der Elektrolytaustausch und der Abtransport des abgetragenen Materials verbessert wird.

Das beschriebene Bearbeitungsverfahren kann insbesondere bei der Herstellung und Bearbeitung von Lauf - und Leitschaufeln aus Titan -, Nickel -, oder Eisenbasislegierungen eingesetzt werden, wobei vor allem auch Hinterschneidungen herstellbar sind.

Obwohl das Verfahren bisher nur für eine Elektrode beschrieben wurde, ist selbstverständlich, dass mehrere Elektroden gleichzeitig, insbesondere zur Bearbeitung verschiedener Seiten des Bauteils eingesetzt werden können.

### KURZBESCHREIBUNG DER FIGUREN

Die beigefügten Zeichnungen zeigen in rein schematischer Weise in
- Fig.1: eine Schnittdarstellung durch eine Laufschaufel bei der ECM - Bearbeitung nach dem Stand der Technik;
- Fig.2: eine Detailansicht der Figur 1;
- Fig.3: in den Teilbildern a) und b) die verschiedenen Positionen der Elektroden bei einer erfindungsgemäßen ECM - Bearbeitung einer Laufschaufel eines Flugtriebwerks; und in

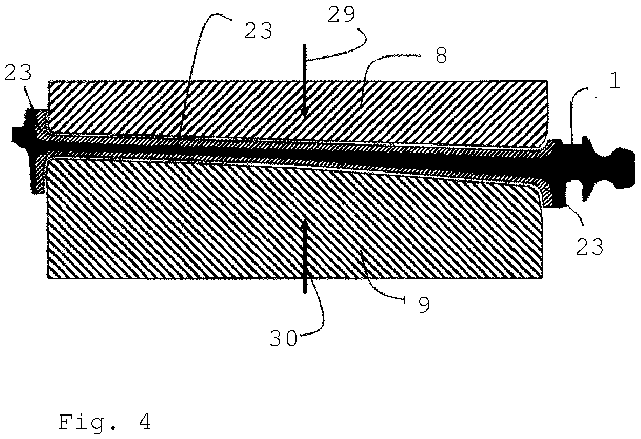

- Fig.4: eine Darstellung der Position der Elektroden bei einem ersten Teilschritt einer ECM - Bearbeitung nach der vorliegenden Erfindung.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels anhand der beigefügten Zeichnungen deutlich. Allerdings ist die Erfindung nicht auf dieses Ausführungsbeispiel beschränkt.

Die Figur 1 zeigt eine elektrochemische Bearbeitung (ECM electrochemical machining) einer Laufschaufel 1 eines Flugtriebwerks im Querschnitt gemäß dem Stand der Technik. Die Laufschaufel 1 weist im Querschnitt zwei U-förmige Ausnehmungen auf, die durch die Oberflächen 2,3,4,5,6,7 gebildet sind. Die Oberflächen 2 und 5 stellen die Schaufelblattoberflächen dar, während die Flächen 3,4,6,7 die strömungskanalseitigen Flächen der inneren und äußeren Deckbänder sind.

Zur ECM-Bearbeitung der Oberflächen 2 bis 7 sind zwei Elektroden 8,9 vorgesehen, die in ihrer äußeren Kontur den Ausnehmungen bzw. den Oberflächen 2 bis 7 entsprechen, aber kleiner dimensioniert sind, sodass die Elektroden 8,9 in den Ausnehmungen aufgenommen werden können, wobei jeweils ein Spalt 10,11 zwischen den Elektroden 8,9 und den jeweiligen zu bearbeitenden Oberflächen 2 bis 7 gebildet wird. Insbesondere weisen die Elektroden zumindest teilweise die Negativform der zu erzeugenden Form der zu bearbeitenden Oberflächen auf.

Die Elektroden 8,9 weisen entsprechende Arbeitsflächen 12 bis 17 auf, die den zu bearbeitenden Oberflächen der Laufschaufel 1 entsprechen.

Bei der elektrochemischen Bearbeitung liegt im Spalt 10,11 zwischen den Elektroden 8,9 und der Laufschaufel 1 ein Elektrolyt vor, sodass bei Anlegen einer entsprechenden Spannung ein Stromfluss stattfindet, durch den ein Abtrag von den zu bearbeitenden Oberflächen 2 bis 7 stattfindet. Durch geeignetes Einstellen eines Abstands zwischen Arbeitsfläche 12 bis 17 und zu bearbeitenden Oberflächen 2 bis 7 und geeignetes Verfahren der Elektroden 8,9 gegenüber der Laufschaufel 1 kann eine gewünschte Endoberfläche erzeugt werden.

Allerdings ergibt sich bei dem Verfahren gemäß dem Stand der Technik das Problem, dass an den Oberflächen der inneren und äußeren Deckbänder, also den Oberflächen 3,4,6,7 beim Einsenken der Elektroden 8,9 in die Ausnehmungen entsprechend der dargestellten Pfeile der Figur 1 Seitenspaltbedingungen herrschen, d.h. eine gleichbleibende Position der Elektroden 8,9 zu dem zu bearbeitenden Bauteil, nämlich der Laufschaufel 1, vorliegt, sodass keine Senkbewegung in Richtung der entsprechenden Oberflächen 3,4,6,7 erfolgt und diese nicht in der gewünschten Genauigkeit bearbeitet werden können. Dadurch entstehen an den Deckbändern ungleichmäßiger Abtrag mit großen Toleranzen und schlechter Oberflächenqualität.

Darüber hinaus kann eine Hinterschneidung 20, wie sie in der Figur 2 dargestellt ist, ebenfalls nicht hergestellt werden. Da die Hinterschneidung 20 einen spitzen Winkel zwischen der Oberfläche 4 und der Oberfläche 2 einschließt, kann die Arbeitsfläche 14 nicht so an die zu bearbeitende Oberfläche 4 angenähert werden, dass die Hinterschneidung 20 herausgearbeitet werden kann, denn selbst wenn die Arbeitsfläche 14 ebenfalls mit einem spitzen Winkel zur Arbeitsfläche 12 ausgebildet wäre, könnte durch die lineare Bewegung der Elektrode 8 die komplementäre Form der Arbeitselektrode 8 nicht in den Bereich der Hinterschneidung 20 eingeführt werden und somit nicht beide Deckbänder bearbeitet werden.

Dem gegenüber wird bei dem erfindungsgemäßen Verfahren die Elektrode 8,9 abwechselnd in unterschiedliche Positionen gebracht, sodass auch die quer zu den Oberflächen 2,5 angeordneten Oberflächen 3,4,6,7 in definierter Weise bearbeitet werden können. Zusätzlich können auch bei entsprechender Ausbildung der Elektroden 8,9 entsprechende Hinterschneidungen geformt werden.

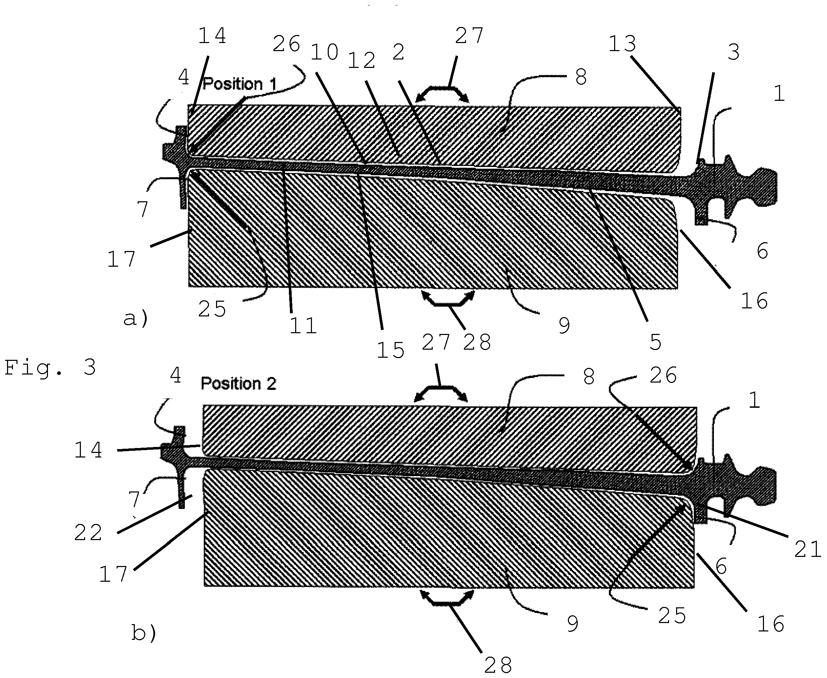

Die Figur 3 zeigt in den Teilbildern a) und b) eine Schnittdarstellung einer elektrochemischen Bearbeitung einer Laufschaufel ähnlich der Figur 1, wobei in den Teilbildern a) und b) die verschiedenen Bearbeitungspositionen der Elektroden 8,9 gemäß der vorliegenden Erfindung dargestellt sind. Hierbei werden die Oberflächen 3,6 der Laufschaufel 1 als zweite Oberflächen und die Oberflächen 4,7 als erste Oberflächen bezeichnet, während die Oberflächen 2,5 dritte Oberflächen darstellen. Entsprechend sind die Arbeitsflächen 13,16 zweite Arbeitsflächen und die Arbeitsflächen 14,17 erste Arbeitsflächen, während die Arbeitsflächen 12,15 als dritte Arbeitsflächen bezeichnet werden können.

In der Figur 3 a) ist eine erste Bearbeitungsposition der Elektroden 8,9 bezüglich der zu bearbeitenden Laufschaufel 1 dargestellt, bei welcher die Elektroden 8,9 so in der Nähe der zu bearbeitenden dritten 2,5 und ersten 4,7 Oberflächen angeordnet sind, sodass sich zwischen den Elektroden 8,9 und den entsprechenden Oberflächen 2,4,5,7 ein erster Spalt 21 ausbildet, der einen Mindestabstand der Arbeitsflächen der Elektrode zu den zu bearbeitenden Oberflächen aufweist und somit zur elektrochemischen Bearbeitung geeignet ist. Dem gegenüber sind bei der in Figur 3 a) gezeigten ersten Bearbeitungsposition die Elektroden 8,9 gegenüber den zweiten Oberflächen 3,6 so eingestellt, dass sich eine zweite Spaltbreite 22 ergibt, die für einen elektrochemischen Abtrag zu groß ist bzw. nur einen geringen, vernachlässigbaren Abtrag ermöglicht.

Dem gegenüber ist in der Figur 3 b) die zweite Bearbeitungsposition der Elektroden 8,9 dargestellt, bei welcher die Elektroden 8,9 in Bezug auf die zu bearbeitenden Flächen 2,3,5,6 (dritte und zweite Oberflächen) in einer Bearbeitungsposition sind, also einen ersten Spalt 21 ausbilden, der eine elektrochemische Bearbeitung der zweiten Oberflächen 3,6 und der dritten Oberflächen 2,5 ermöglicht. Entsprechend ist zwischen den ersten Arbeitsflächen 14,17 der Elektroden 8,9 und den ersten Oberflächen 4,7 der Laufschaufel 1 ein Spalt mit einer zweiten Spaltbreite 22 ausgebildet, der wiederum keine oder eine vernachlässigbare kleine elektrochemische Bearbeitung zulässt.

Die Elektroden 8,9 werden nunmehr abwechselnd in die Bearbeitungsposition 1 und Bearbeitungsposition 2 gemäß der Figuren 3 a) und b) gebracht, und zwar durch eine beliebige Bewegung, die durch die Pfeile 27,28 dargestellt ist. Nach Erreichen der jeweiligen Bearbeitungsposition (Senkposition) wird der Senkvorgang gestartet und die Elektrode unter einem Winkel von beispielsweise 45° in Richtung der Pfeile 25,26 auf die zu bearbeitenden Blatt- und Deckbandflächen verfahren. Nach der Senkbewegung der Elektrode mit der linearen Bewegung unter einem Winkel von beispielsweise 45° zu den zu bearbeitenden dritten Oberflächen 2 bzw.5 an die Laufschaufel 1 und Bearbeitung derselben wird die Elektrode von der Laufschaufel in einer beliebigen Bewegung wieder entfernt und anschließend wieder in eine Bearbeitungsposition bezüglich der anderen zu bearbeitenden Oberflächen gebracht.

Erst wenn sich die Elektroden 8,9 in einer ersten Bearbeitungsposition oder einer zweiten Bearbeitungsposition befinden, erfolgt ein Anschalten des Stroms, sodass eine ECM - Bearbeitung möglich ist. Der Strom kann hierbei als Gleichstrom oder als Pulsstrom aufgebracht werden, und zwar in Form von Einzelpulsen oder als Pulspaket. Zusätzlich ist es möglich, in den ersten und zweiten Bearbeitungspositionen und eine mechanische Oszillation des zu bearbeitenden Bauteils, also der Laufschaufel 1 gegenüber den Elektroden 8,9 oder umgekehrt zu realisieren, welche einerseits ein Öffnen und Schließen des Bearbeitungsspalts ermöglicht, sodass abgetragenes Material aus dem Spalt entfernt und frischer Elektrolyt zugeführt werden kann, und andererseits eine sehr kleine Spaltbreite mit einem minimalen Abstand der Arbeitsfläche von der zu bearbeitenden Fläche von weniger als 0,1 mm für die Bearbeitung ermöglicht.

Durch die beschriebene Bewegung der Elektroden 8,9 ist bei einer entsprechenden Ausformung der Elektroden 8,9 auch die Ausbildung von Hinterschneidungen sowie eine hohen Oberflächenqualität der bearbeiteten Oberflächen mit insbesondere glatten Übergängen möglich, d.h. ohne Unebenheiten oder Stufen zwischen den Bearbeitungsbereichen bzw. kleiner 10 µm bis 20 µm.

Zur vorbereitenden Bearbeitung der zu bearbeitenden Ausnehmungen können die Elektroden 8,9 zunächst auch in eine mittige Position zwischen den Deckbändern gebracht werden, in der sich gemäß einer dritten Bearbeitungsposition ein im Wesentlichen gleicher Mindestabstand der Arbeitsflächen der Elektroden 8,9 zu den zu bearbeitenden Oberflächen 2 bis 7 einstellt. Bei der Bearbeitung können die Elektroden linear gemäß den Pfeilen 29,30 in Richtung der zu bearbeitenden dritten Oberflächen 2,5, also in Richtung der Schaufelblätter verfahren werden. Dieser Vorgang, der auch als Auskammern bezeichnet wird, dient dazu, eine U-förmige Vorkontur mit einem Aufmaß von ca. 0,5 bis 3 mm der herzustellenden Kontur auszubilden, sodass anschließend gemäß der abwechselnden Bearbeitung in verschiedenen Positionen der Elektroden die Endkontur hergestellt werden kann. Hierbei kann unmittelbar nach dem Auskammern ohne Werkzeugwechsel die Endkontur bearbeitet werden.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in der Weise vorgenommen werden können, dass einzelne Merkmale weggelassen oder andersartige Kombinationen von Merkmalen verwirklicht werden, solange der Schutzbereich der beigefügten Ansprüche nicht verlassen wird.

## Patentansprüche

1. Verfahren zur elektrochemischen Bearbeitung eines Bauteils (1), welches eine Ausnehmung mit mindestens drei zu bearbeitende Oberflächen (2, 3, 4; 5, 6, 7) aufweist, die im Schnitt in etwa eine U - Form bilden, wobei eine erste und eine zweite zu bearbeitende Oberfläche in einem Winkel zur dritten zu bearbeitenden Oberfläche angeordnet sind, der größer als 0° und kleiner als 180° ist, und wobei die erste und zweite Oberflächen einander gegenüber liegen und die dritte Oberfläche einschließen, wobei mindestens eine Elektrode (8, 9) bereitgestellt wird, die mindestens drei Arbeitsflächen (12, 3, 14; 15, 16, 17) aufweist und so geformt ist, dass sie eine äußere Kontur aufweist, die von der Form komplementär zu der zu bearbeitenden Ausnehmung und in Form der späteren Fertigkontur ausgebildet ist, aber zumindest in einer Richtung kleiner als die Ausnehmung dimensioniert ist, so dass sich bei der Anordnung der Elektrode in der Ausnehmung ein Spalt zwischen Ausnehmung und Elektrode ausbildet,
**dadurch gekennzeichnet, dass**
die Elektrode abwechselnd so angeordnet wird, dass einmal eine erste Bearbeitungsposition einer ersten Arbeitsfläche (13, 16) zur ersten Oberflächen (3, 6) sowie einer dritten Arbeitsfläche (12, 15) zur dritten Oberfläche (2, 5) und das andere Mal eine zweite Bearbeitungsposition einer zweiten Arbeitsflächen (14, 17) zur zweiten Oberfläche (4, 7) sowie der dritten Arbeitsfläche (12, 15) zur dritten Oberfläche (2, 5) eingestellt wird, und dass bei der ersten Bearbeitungsposition eine erste Spaltbreite (21) zwischen der ersten Arbeitsfläche (13, 16) und der ersten Oberfläche (3, 6) und zwischen der dritten Arbeitsfläche (12, 15) und der dritten Oberflächen (2, 5) sowie eine zweite Spaltbreite (22) zwischen der zweiten Arbeitsfläche und der zweiten Oberfläche gegeben ist, wobei die zweite Spaltbreite (22) größer als die erste Spaltbreite (21) ist, und dass bei der zweiten Bearbeitungsposition eine erste Spaltbreite zwischen der zweiten Arbeitsfläche und der zweiten Oberfläche und zwischen der dritten Arbeitsfläche (12, 15) und der dritten Oberfläche (2, 5) sowie eine zweite Spaltbreite (22) zwischen der ersten Arbeitsfläche und der ersten Oberfläche gegeben ist, die größer ist als die erste Spaltbreite, wobei der Strom zur elektrochemischen Bearbeitung bei Erreichen der jeweiligen Bearbeitungsposition eingeschaltet wird, und die Annäherung der Elektrode (8, 9) an die erste oder zweite Bearbeitungsposition beliebig erfolgt und die Senkbewegung bei der elektrochemischen Bearbeitung mit einer Bewegungsrichtung der Elektrode unter einem Winkel von 20° bis 70° zur dritten Oberflächen oder in Richtung der Winkelhalbierenden des Winkels zwischen erster und dritter oder zweiter und dritter Oberfläche erfolgt.

2. Verfahren nach einem der vorhergehenden Ansprüche,
**dadurch gekennzeichnet, dass**
der Materialabtrag in den jeweiligen Bearbeitungspositionen so gering gehalten wird, dass bei der bei den abwechselnden Bearbeitungspositionen jedes Mal bearbeiteten dritten Oberfläche keine Unebenheiten oder stufigen Übergänge ausgebildet werden oder vorhandene Unebenheiten oder Stufen kleiner 200 µm, insbesondere kleiner 100 µm, vorzugsweise kleiner 50 µm sind.

3. Verfahren nach einem der vorhergehenden Ansprüche,
**dadurch gekennzeichnet, dass**
der Materialabtrag pro Bearbeitungsschritt in einer einzigen der abwechselnden Bearbeitungspositionen, insbesondere bei der dritten Oberfläche im Bereich von 0,01 bis 0,1 mm eingestellt wird.

4. Verfahren nach einem der vorhergehenden Ansprüche,
**dadurch gekennzeichnet, dass**
die abwechselnde Bearbeitung der ersten und zweiten Oberfläche in regelmäßigen oder unregelmäßigen Zyklen erfolgt.

5. Verfahren nach einem der vorhergehenden Ansprüche,
**dadurch gekennzeichnet, dass**
die abwechselnde Bearbeitung in der ersten und zweiten Bearbeitungsposition mit einer Frequenz von 0,01 bis 100 Hz, insbesondere 0,1 bis 10 Hz erfolgt.

6. Verfahren nach einem der vorhergehenden Ansprüche,
**dadurch gekennzeichnet, dass**
die Senkbewegung bei der elektrochemischen Bearbeitung mit einer Bewegungsrichtung der Elektrode unter einem Winkel von 30° bis 60°, insbesondere unter 45° zur dritten Oberflächen oder in Richtung der Winkelhalbierenden des Winkels zwischen erster und dritter oder zweiter und dritter Oberflächen erfolgt.

7. Verfahren nach einem der vorhergehenden Ansprüche,
**dadurch gekennzeichnet, dass**
vor der abwechselnden Bearbeitung in der ersten und zweiten Bearbeitungsposition eine Bearbeitung der mindestens drei zu bearbeitenden Oberflächen in einer Vorbearbeitungsposition erfolgt, wobei die elektrochemische Bearbeitung in Richtung der dritten Oberfläche erfolgt.

8. Verfahren nach einem der vorhergehenden Ansprüche,
**dadurch gekennzeichnet, dass**
die elektrochemische Bearbeitung mit Pulsstrom erfolgt, wobei insbesondere der Pulsstrom als Einzelpuls oder als Pulspaket aufgebracht wird.

9. Verfahren nach einem der vorhergehenden Ansprüche,
**dadurch gekennzeichnet, dass**
bei der elektrochemischen Bearbeitung eine mechanische Oszillation mit einer Relativbewegung von Elektrode und zu bearbeitendem Bauteil zum Öffnen und Schließen des Spalts zwischen Elektrode und zu bearbeitendem Bauteil erfolgt, wobei insbesondere der Strom zur elektrochemischen Bearbeitung immer nur dann eingeschaltet wird, wenn sich die Elektrode in der Nähe der zu bearbeitenden Oberfläche befindet.

10. Verfahren nach Anspruch 11,
**dadurch gekennzeichnet, dass**
die mechanische Oszillationsfrequenz zwischen 0,1 und 100 Hz beträgt.

11. Verfahren nach einem der vorhergehenden Ansprüche,
**dadurch gekennzeichnet, dass**
das Verfahren zur Herstellung von Lauf - und Leitschaufeln von Gasturbinen aus Titan -, Nickel - und Eisenbasislegierungen eingesetzt wird.

12. Verfahren nach einem der vorhergehenden Ansprüche,
**dadurch gekennzeichnet, dass**
die ersten oder zweiten Oberflächen mit der dritten Oberfläche Hinterschneidungen bilden.

13. Verfahren nach einem der vorhergehenden Ansprüche,
**dadurch gekennzeichnet, dass**
mindestens zwei Elektroden (8, 9), vorzugsweise drei oder mehr einander gegenüber liegende, insbesondere sternförmig angeordnete Elektroden das Bauteil von mehreren Seiten bearbeiten.

## Claims

1. A process for electrochemically machining a component (1), which has a cavity with at least three surfaces (2, 3, 4; 5, 6, 7) to be machined, which approximately have a U-shaped cross section, wherein a first and second surface to be machined are positioned so as to form an angle with the third surface to be machined, which angle is higher than 0° and lower than 180°, and wherein the first and second surface are opposite each other and enclose the third surface, wherein at least one electrode (8, 9) is provided, which has at least three working surfaces (12, 13, 14; 15, 16, 17) and is adapted to have an outer contour, whose form is complementary to the cavity to be machined and which has the form of the finished contour, which however has a dimension in at least one direction which is smaller than the cavity, so that when disposing the electrode into the cavity, a gap is formed between the cavity and the electrode,
**characterized in that**
the electrode is alternatively positioned in such a way that one time a first machining position of a first working surface (13, 16) is set with respect to the first surface (3, 6) and a third working surface (12, 15) is set with respect to the third surface (2, 5) and the other time a second machining position of a second working surface (14, 17) is set with respect to the second surface (4, 7) and the third working surface (12, 15) is set with respect to the third surface (2, 5), and that in the first machining position, a first gap width (21) is provided between the first working surface (13, 16) and the first surface (3, 6) and between the third working surface (12, 15) and the third surface (2, 5) as well as a second gap width (22) is provided between the second working surface and the second surface, wherein the second gap width (22) is larger than the first gap width (21), and that in the second machining position, a first gap width is provided between the second working surface and the second surface and between the third working surface (12, 15) and the third surface (2, 5) as well as a second gap width (22) is provided between the first working surface and the first surface, which is larger than the first gap width, wherein the current for the electrochemical machining is activated when reaching the respective machining position, and approaching the first and second machining position by the electrode (8, 9) is performed in any arbitrary way and the lowering movement during electrochemical machining occurs in a motion direction of the electrode forming an angle of 20° to 70° with respect to the third surface or in the direction of the bisector of the angle between the first and third or second and third surface.

2. The process of any of the preceding claims,
**characterized in that**
the material removal in the respective machining positions is kept at such a low level, that no irregularities or stepped transitions are formed on the third surface, which is machined each time in the alternating machining positions, or the irregularities or steps are smaller than 200 µm, in particular smaller than 100 µm, preferably smaller than 50 µm.

3. The process of any of the preceding claims,
**characterized in that**
the material removal for each machining step in one single position of the alternating machining positions, in particular at the third surface, is set in the range between 0.01 and 0.1 mm.

4. The process of any of the preceding claims,
**characterized in that**
the alternating machining of the first and second surface occurs according to regular or irregular cycles.

5. The process of any of the preceding claims,
**characterized in that**
the alternating machining in the first and second machining position occurs with a frequency of 0.01 to 100 Hz, in particular between 0.1 and 10 Hz.

6. The process of any of the preceding claims,
**characterized in that**
the lowering movement during the electrochemical machining occurs along a motion direction of the electrode forming an angle of 30° to 60°, in particular 45° with respect to the third surface or in a direction of the bisector of the angle between the first and third or second and third surface.

7. The process of any of the preceding claims,
**characterized in that**
before the alternating machining in the first and second machining position, a machining of the at least three surfaces to be machined occurs in a pre-machining position, wherein the electrochemical machining occurs in the direction of the third surface.

8. The process of any of the preceding claims,
**characterized in that**
the electrochemical machining is performed by pulse current, wherein in particular the pulse current is applied as a single pulse or as a pulse packet.

9. The process of any of the preceding claims,
**characterized in that**
during the electrochemical machining, a mechanical oscillation occurs, having a relative movement of the electrode and of the component to be machined for opening and closing the gap between the electrode and the component to be machined, wherein in particular the current for the electrochemical machining is activated each time only when the electrode is near the surface to be machined.

10. The process of claim 11,
**characterized in that**
the mechanical oscillation frequency lies between 0.1 and 100 Hz.

11. The process of any of the preceding claims,
**characterized in that**
a process for manufacturing rotor and stator blades of gas turbines from nickel based and iron based alloys is used.

12. The process of any of the preceding claims,
**characterized in that**
the first and second surfaces form undercuts with the third surface.

13. The process of any of the preceding claims,
**characterized in that**
at least two electrodes (8, 9), preferably three or more electrodes, opposite to each other, in particular positioned according to a star shape, machine the component from a plurality of sides.

## Revendications

1. Procédé pour le traitement électrochimique d'un composant (1) présentant un évidement avec au moins trois surfaces à traiter (2, 3, 4 ; 5, 6, 7), lesquelles forment approximativement une section en U, dans lequel une première et une deuxième surface à traiter sont disposées sous un angle supérieur à 0° et inférieur à 180° par rapport à la troisième surface à traiter, et dans lequel la première et la deuxième surface sont opposées l'une à l'autre et incluent la troisième surface, dans lequel il est prévu au moins une électrode (8, 9) présentant au moins trois surfaces de travail (12, 13, 14 ; 15, 16, 17) et conçue de manière à présenter un contour extérieur dont la forme est complémentaire à celle de l'évidement à traiter et présente la forme du futur contour définitif, tout en ayant néanmoins des dimensions plus petites que l'évidement dans une direction, de manière à former une fente entre l'évidement et l'électrode lors de l'agencement de l'électrode dans l'évidement,
**caractérisé en ce que**
l'électrode est alternativement agencée de manière à régler d'une part une première position de traitement d'une première surface de traitement (13, 16) par rapport à la première surface (3, 6) ainsi que d'une troisième surface de traitement (12, 15) par rapport à la troisième surface (2, 5) et d'autre part une deuxième position de traitement d'une deuxième surface de travail (14, 17) par rapport à la deuxième surface (4, 7) ainsi que de la troisième surface de travail (12, 15) par rapport à la troisième surface (2, 5), et **en ce que** dans la première position de traitement, il est défini une première largeur de fente (21) entre la première surface de travail (13, 16) et la première surface (3, 6) et entre la troisième surface de travail (12, 15) et la troisième surface (2, 5) ainsi qu'une deuxième largeur de fente (22) entre la deuxième surface de travail et la deuxième surface, la deuxième largeur de fente (22) étant supérieure à la première largeur de fente (21), et **en ce que** dans la deuxième position de traitement, il est défini une première largeur de fente entre la deuxième surface de travail et la deuxième surface et entre la troisième surface de travail (12, 15) et la troisième surface (2, 5) ainsi qu'une deuxième largeur de fente (22) entre la première surface de travail et la première surface, laquelle est supérieure à la première largeur de fente, le courant nécessaire au traitement électrochimique étant établi lors de l'atteinte de la position de traitement respective, et l'électrode (8, 9) étant rapprochée au choix de la première ou de la deuxième position de traitement, et le mouvement d'abaissement lors du traitement électrochimique étant réalisé avec une direction de déplacement de l'électrode sous un angle de 20° à 70° par rapport à la troisième surface ou dans la direction de la bissectrice de l'angle entre la première et la troisième surface ou entre la deuxième et la troisième surface.

2. Procédé selon l'une quelconque des revendications précédentes,
**caractérisé en ce que**
l'enlèvement de matière dans les positions de traitement respectives est maintenu faible de manière à éviter les inégalités ou les transitions en gradins dans la troisième surface à traiter respectivement dans les positions de traitement alternatives, ou de manière à maintenir les inégalités ou gradins en dessous de 200 µm, en particulier en dessous de 100 µm, de préférence en dessous de 50 µm.

3. Procédé selon l'une quelconque des revendications précédentes,
**caractérisé en ce que**
l'enlèvement de matière à chaque étape de traitement est réglé dans la plage de 0,01 à 0,1 mm dans une seule des positions de traitement alternatives, en particulier pour la troisième surface.

4. Procédé selon l'une quelconque des revendications précédentes,
**caractérisé en ce que**
le traitement alternatif de la première et de la deuxième surface est réalisé selon des cycles réguliers ou irréguliers.

5. Procédé selon l'une des revendications précédentes,
**caractérisé en ce que**
le traitement alternatif dans la première et la deuxième position de traitement est réalisé avec une fréquence de 0,01 à 100 Hz, en particulier de 0,1 à 10 Hz.

6. Procédé selon l'une quelconque des revendications précédentes,
**caractérisé en ce que**
le mouvement d'abaissement lors du traitement électrochimique est réalisé avec une direction de déplacement de l'électrode sous un angle de 30° à 60°, en particulier sous 45° par rapport à la troisième surface, ou dans la direction de la bissectrice de l'angle entre la première et la troisième surface ou entre la deuxième et la troisième surface.

7. Procédé selon l'une quelconque des revendications précédentes,
**caractérisé en ce que**
avant le traitement alternatif dans les première et deuxième positions de traitement, un traitement des au moins trois surfaces à traiter est réalisé dans une position de prétraitement, le traitement électrochimique étant réalisé dans la direction de la troisième surface.

8. Procédé selon l'une quelconque des revendications précédentes,
**caractérisé en ce que**
le traitement électrochimique est réalisé avec un courant pulsé, le courant pulsé étant en particulier appliqué sous la forme d'une impulsion unique ou d'un paquet d'impulsions.

9. Procédé selon l'une quelconque des revendications précédentes,
**caractérisé en ce que**
dans le traitement électrochimique, une oscillation mécanique est générée avec un mouvement relatif de l'électrode et du composant à traiter pour ouvrir et fermer la fente entre l'électrode et le composant à traiter, le courant nécessaire au traitement électrochimique étant en particulier établi seulement lorsque l'électrode se trouve à proximité de la surface à traiter.

10. Procédé selon la revendication 11,
**caractérisé en ce que**
la fréquence d'oscillation mécanique est comprise entre 0,1 et 100 Hz.

11. Procédé selon l'une quelconque des revendications précédentes,
**caractérisé en ce que**
le procédé est mis en oeuvre pour la fabrication d'ailettes et d'aubages de turbines à gaz en alliages à base de titane, de nickel et de fer.

12. Procédé selon l'une quelconque des revendications précédentes,
**caractérisé en ce que**
les première et deuxième surfaces forment des contre-dépouilles avec la troisième surface.

13. Procédé selon l'une quelconque des revendications précédentes,
**caractérisé en ce que**
au moins deux électrodes (8, 9), de préférence trois ou plusieurs électrodes opposées les unes aux autres, en particulier disposées en forme d'étoile, traitent le composant par plusieurs côtés.
